# EUROPEAN PATENT SPECIFICATION

(11) **EP 2 079 258 B1**
(45) Date of publication and mention of the grant of the patent: **02.09.2015**
(21) Application number: 08150203.1
(22) Date of filing: 11.01.2008
(51) Int. Cl.: H04W 24/02

(54) **Automatic allocation of area codes for femtocell deployment**
Automatische Zuweisung von Bereichscodes für den Femtocell-Einsatz
Affectation automatique de codes régionaux pour le déploiement femtocell

(43) Date of publication of application: 15.07.2009
(73) Proprietor: Alcatel-Lucent USA Inc., Murray Hill, NJ 07974 (US)
(72) Inventor: Ho, Lester, Swindon, Wiltshire SN5 5GD (GB); Claussen, Holger, Swindon, Wiltshire SN5 3NJ (GB)
(74) Representative: Sarup, David Alexander

(56) References cited:
- EP-A- 1 318 688
- WO-A-2005/076648
- WO-A-2007/134830
- WO-A-2007/136339
- US-A1- 2005 148 368
- US-A1- 2005 148 368
- US-A1- 2005 255 890
- US-A1- 2007 097 939

## Description

The invention relates to cellular radio communications, in particular to a method of automatically allocating an area code to a femtocell.

Femtocells are low-power cellular base stations that cover small areas, e.g., an office or home, and may be deployed to substitute the mobile operator's network in the direct vicinity of the location of deployment. Typically, femtocells are coupled to the mobile operator's network via DSL or cable broadband connections. Preferably, femtocells are capable of easy plug-and-play user deployment. One of the parameters that should be configured automatically for plug-and-play capability is the allocation of area codes, e.g., Location and Routing Area Codes (LAC, RAC).

In UMTS (Universal Mobile Telecommunications System) based cellular communication networks, the coverage area is usually divided into contiguous Location Areas (LAs), and the macrocellular base stations within a specific LA use the same LAC. According to the 3GPP specification TS 23.012 (V6.4.0), LA is an area in which, after having performed a location update once, UEs (user equipments) may roam without being required to perform subsequent location updates for reason of location change.

The LAC is specified in the 3GPP specification TS 23.003 (V6.14.0) as a fixed length code (of 2 octets) identifying a location area within a PLMN (public land mobile network).

A user equipment (UE), e.g., a mobile telephone or a UMTS-card in a laptop, informs the network which LA it is currently "camped" in, and will perform an location update when it enters a new LA. When there is an incoming call to a UE, the network will instruct only base stations within the UE's last known LA to page for that UE. LAs are also used to determine the geographical location of the UE for location based services and during emergency calls. Each LA is subdivided into a plurality of routing areas (RA). Routing area codes (RACs) are used for data calls. The RAC is specified in the 3GPP specification TS 23.003 (V6.14.0) as a fixed length code (of 1 octet) identifying a routing area within a location area.

The LACs of femtocells, under certain scenarios, need to be different from the LACs used by the macrocellular underlay network. This measure forces the UE to perform a location update and to camp onto the user's femtocell (i.e., to be served by the user's femtocell) whenever the user enters the femtocell's range, and vice versa when exiting the femtocell's range. Also, the network is informed that the user is served via a femtocell and no longer served via the macrocellular network. This applies accordingly for the RACs.

LACs for femtocells also need to be reused in the mobile network due to the fact that there are not enough LACs available to give each femtocell in the operator's network its own unique LAC. In order to make sure that a UE does not continue camping on a neighboring femtocell, without realizing it, the LAC of a femtocell should be different from the LACs of its neighboring femtocells. Thus, allocated LACs of the neighboring femtocells should be disparate. This applies accordingly for the RACs.

Currently, the allocation of LACs and RACs is done through manual network planning. It is very costly and time consuming if the same conventional approach is used for femtocell deployment as the number of base stations is much higher and deployment patterns are unpredictable. In addition, the number of base stations is not constant over time since with increasing use of femtocells their total number will increase dependent on the market penetration. This will require continuous re-planning.

WO 2007/136339 discloses a femtocell layer comprising a plurality of femtocells. A number of Location Area Identities (LAI) is reserved for the femtocell layer. When the femtocell base station is powered on, it performs predefined activities and contacts a femtocell radio network controller for the initial and automatic configuration of the needed cell configuration and other information. An LAI is also allocated for each femtocell during the automatic configuration procedure. If the number of femtocells is higher than the number of the reserved LAIs, the same LAI is shared by multiple femtocells. The LAI allocation mechanism may be a random allocation mechanism, round-robin algorithm, or other suitable allocation algorithm.

US 2005/0148368 A1 discloses an allocation method for allocating an LAC to a new internet base station (iBS). It is proposed that immediately adjacent iBSs should have different LACs. When switched on, a new iBS will carry out a radio environment investigation and determine whether it can receive other iBSs. If so, it will decode the LACs of these other iBSs and report them to the iSM (internet System Manager). The iSM will determine that these other iBSs are immediately adjacent to the new iBS if their signal levels are above a certain threshold and then ensure that the new iBS gets a different one.

There is a need to provide a method and a corresponding apparatus for allocating area codes (e.g., a LA) to femtocells which overcome the above mentioned problem, thereby considering femtocell specific requirements for area code allocation as mentioned above.

This is achieved by the method and the apparatus according to the independent claims. The dependent claims refer to preferred embodiments of the invention.

The first aspect of the invention relates to a method of automatically allocating an area code to a first femtocell. The method aims to allocate an area code that is re-used furthest away (without being used elsewhere closer by femtocells).

The first femtocell may be surrounded by a plurality of second femtocells. A plurality of area codes is already allocated to the plurality of second femtocells, preferably, by means of the same method as for allocating the area code to the first femtocell.

According to the method, an area code of the plurality of area codes is determined which is used furthest away from the first femtocell by a second femtocell, without being used by a closer second femtocell. In other words, that area code is determined which is used at the largest minimum distance from the new femtocell (the term "minimum distance" means the smallest distance to any femtocell using a particular area code). Before determining the area code, the physical location of the first femtocell is determined. The area code is determined based on the physical location of the first femtocell. Finally, the determined area code is allocated to the first femtocell.

The inventive method allows allocation of area codes in a disparate manner and allows maximizing the code re-use distance. This avoids that a UE camps on a neighboring second femtocell instead on the first femtocell, without realizing it due to the usage of the same area code. Because of maximized re-use distances, the usage of the same area code for neighboring femtocells is almost impossible.

Further, the inventive method provides automatic area code allocation without the need of a very costly and time consuming manual area code allocation. The automatic area code allocation may be performed during the plug-and-play deployment process of the first femtocell.

It should be noted that the step of determining an area code of the plurality of area codes used by the second femtocells may be carried out in dependency of the condition that no unused area code is available (otherwise an unused area code may be used).

The area code may be an LAC or an RAC. Also, both LAC and RAC may be allocated by use of the inventive method.

Alternatively, the area code may be a Location Area Identification (LAI) or a Routing Area Identification (RAI) as defined in 3GPP specification TS 23.003 (V6.14.0). The LAC and the RAC form part of the LAI and RAI, respectively.

Before determining the area code, the physical location of the first femtocell is determined. The area code is then determined based on the physical location of the first femtocell. However, the method may be also performed based on a sniffer capability of the first femtocell, i.e., the capability of taking measurements of signals from neighboring second femtocells. In this case signals from the neighboring second femtocells may be received and analyzed. Each signal indicates the usage of a specific area code by the respective second femtocell; thus, the area codes used by the second femtocells may be determined. Preferably, by analyzing the received signals, e.g., by determining the electrical field strength, the distances from the first femtocell to the neighboring second femtocells may be also estimated.

Preferably, the method, in particular the step of determining the area code, is carried out external to the first femtocell at an allocation apparatus for area code allocation of femtocells and being operated by the network operator, e.g., a server of the network operator connected to the internet or a plurality of interoperating servers.

In this case, for determining the physical location of the first femtocell, address information of the femtocell (e.g., specified by the user of a femtocell) is received by the allocation apparatus. Preferably, the allocation unit determines location coordinates based on such address information (e.g., geographical coordinates, such as latitude/longitude or Cartesian coordinates x, y).

Based on the location coordinates of the first femtocells (and of the second femtocells which were determined before in the same way), the allocation apparatus may compute distances from the first femtocell to each of the second femtocells. Alternatively, the distances may be computed at the first femtocell. Further, the allocation apparatus may have access to a list of codes that can be allocated to deployed femtocells. This list of codes is typically set by the network operator and is reserved for use by femtocells only.

Preferably, if not all area codes have been used up, then an area code that has not been used yet is chosen by the allocation apparatus for the newly deployed first femtocell. Alternatively, when detecting that all codes have been used up, that area code is determined which is re-used furthest away (without being re-used at a closer second femtocell).

According to a preferred embodiment, the method may be limited in such way that the area code allocation only depends on information of neighboring femtocells. Such limitation is advantageous since the number of deployed femtocells may include thousands or even millions of femtocells, resulting in a high computational effort. For reducing the computational effort, the area for femtocell deployment may be divided. In particular, a grid of cells may be provided with the grid dividing the area for femtocell deployment. That cell is determined within which the first femtocell is deployed. For determining the area code, only second femtocells are considered which are located within a subset of cells of the grid. The subset of cells includes at least the determined cell containing the first femtocell. Preferably, the subset of cells is limited to the determined cell containing the first femtocell and to the cells adjacent to the determined cell.

When using a grid of cells for reducing the computational effort, it is advantageous to provide a grid having a location dependent grid size. The grid size depends on the distribution or density of the femtocells. E.g., the grid size for dense femtocell areas having a high density of femtocells (e.g., city centers) should be smaller than the grid size for sparse areas (e.g., rural areas, areas with low penetration).

A location dependent grid size may be realized as follows: Initially a preset grid of cells may be provided. The number of femtocells located within each cell is monitored. If the number of femtocells within a particular cell exceeds an upper limit, the respective cell is split into a plurality of small size cells.

It should be noted that the above mentioned preferred embodiments of the invention can be arbitrarily combined. Furthermore, it should be noted that the disclosure of the invention also covers other claim combinations than the claim combinations which are explicitly given by the back references in the dependent claims, i.e., the claims can be basically combined in any order.

A second aspect of the invention relates to an apparatus for automatically allocating an area code to a first femtocell which may be surrounded by a plurality of second femtocells. The apparatus may be realized externally to the first femtocell (as discussed above) or internally in the first femtocell. Analogously to the steps of the inventive method, the apparatus comprises means for determining that area code of the plurality of area codes which is used furthest away from the first femtocell at a second femtocell, without being used at a closer second femtocell. Analogously, the apparatus comprises means for allocating the determined area code to the first femtocell. The apparatus comprises a mechanism for determining the physical location of the first femtocell, with the means for determining the area code being configured to determine the area code based on the determined physical location of the first femtocell. Preferably, the apparatus is configured to monitor whether more area codes should be made available for allocation as the femtocell density increases, and configured to notify the network operator of this occurrence. If, for example, the apparatus notices that the average largest minimum distance is approaching a predetermined minimum threshold due to very high femtocell densities, then it would send an alert to the network operator via some means so that more area codes can be made available. This may be also incorporated in the method according to the first aspect of the invention.

Further, the above remarks relating to the method according to the first aspect of the invention and its preferred embodiments are basically also applicable to the apparatus.

The invention is explained below in an exemplary manner with reference to the accompanying drawings, wherein
- Fig. 1: illustrates an exemplary areal distribution of a plurality of femtocells and the resulting area code allocation according to an embodiment of the invention;
- Fig. 2: illustrates the area code allocation for the femtocells in a deployment area partitioned into a 10 x 10 grid;
- Fig. 3: illustrates the process of automatic division of cells in a grid according to an embodiment of the invention;
- Fig. 4: illustrates a first example of a resulting grid after grid division; and
- Fig. 5: illustrates a second example of a resulting grid after grid division.

In the following, an embodiment of the inventive method for allocating an area code during the deployment process is described.

According to the embodiment, in a first step the geographical location of the femtocell is determined. When the user purchases the femtocell, the user has to complete a registration process where, amongst other details, address information of the location of the femtocell is specified by the user (e.g., the address in terms of street, street number, city and/or zip code and optionally floor). E.g., the address information may be specified by the user through a secure website. The address information of the femtocell is sent to the relevant network entity that is charged with allocation of the codes. Hereinafter, the entity is referred to as the Home Unit Server (HUS). At the HUS, the address information of the femtocell is converted using mapping software into location coordinates, e.g., geographical coordinates (such as the latitude/longitude) or Cartesian coordinates pinpointing the location of the address of the new femtocell. The location coordinates of the new femtocell are stored in the HUS. In the same way location coordinates of already operating femtocells were determined before and stored in the HUS.

In a next step, an area code is allocated to the deployed femtocell. This is performed by the HUS as described hereafter. The HUS will have a list of area codes that can be allocated to femtocells. The list of area codes is typically set by the operator and is reserved for use by femtocells only. If not all area codes of the list have been used up (e.g., in case the number of deployed femtocells is smaller than the number of reserved area codes in the list) and at least one area code is not used by one of the already existing femtocells, then an area code that has not been used yet is chosen by the HUS for the new femtocell. Else, the distances of the new femtocell to all other deployed femtocells are calculated using the location coordinates of the femtocells stored in the HUS. The HUS chooses that area code which is re-used furthest away at an existing femtocell, without being re-used at a closer femtocell. In other words, that area code is chosen which is used at the largest minimum distance from the new femtocell (the term "minimum distance" means the smallest distance to any femtocell using a particular area code).

This is explained with reference to the following allocation example:

It is assumed that a set S = {C₁, C₂, C₃, C₄} of area codes C₁, C₂, C₃, C₄ is available for femtocell deployment. These codes are already assigned to already operating femtocells f₁ to f₆.

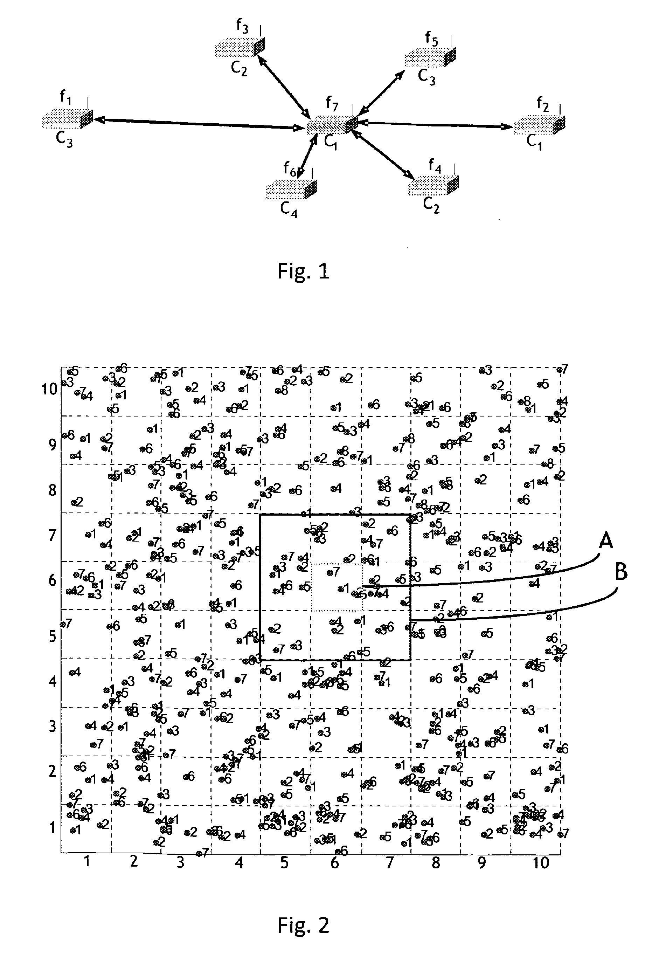

Fig. 1 illustrates an exemplary areal distribution of existing femtocells f₁-f₆ and new femtocell f₇ surrounded by femtocells f₁-f₆ and the resulting area code allocation. The HUS performs an algorithm that uses the information on the physical location of the femtocells to allocate area codes such that re-use distances between neighboring femtocells are maximized. The HUS already allocated code C₃ to femtocell f₁, code C₁ to femtocell f₂, code C₂ to femtocell f₃, code C₂ to femtocell f₄, code C₃ to femtocell f₅ and code C₄ to femtocell f₆.

When new femtocell f₇ is deployed, the distances from new femtocell f₇ to existing femtocells f₁-f₆ are computed, with the distances indicated in Fig. 1 being computed as follows:

| **Femtocell** | **Distance from f₇** | **Code used** |
|---|---|---|
| f₁ | 430 m | C₃ |
| f₂ | 400 m | C₁ |
| f₃ | 370 m | C₂ |
| f₄ | 310 m | C₂ |
| f₅ | 250 m | C₃ |
| f₆ | 180 m | C₄ |

The HUS allocates the code C₁ to new femtocell f₇. The code C₁ is re-used furthest away from femtocell f₇ (at femtocell f₂), without being re-used at a closer femtocell. Note that although femtocell f₁ is located furthest away from femtocell f₇, code C₃ of femtocell f₁ is not re-used for new femtocell f₇ because code C₃ is also used by the much closer femtocell f₅.

Once the area code for new femtocell f₇ is chosen, the HUS then configures femtocell f₇ with the appropriate code (e.g., via the DSL connection of the femtocell).

Further, the apparatus for allocating area codes (here: the HUS) can monitor whether more area codes should be made available for allocation as the femtocell density increases, and notifies the network operator of this occurrence. If, for example, the HUS notices that the average largest minimum distance is approaching a predetermined minimum threshold due to very high femtocell densities, then it would send an alert to the network operator via some means so that more area codes can be made available.

The above discussed embodiment may be further improved so that the computational load is reduced. For reducing the computational load, the allocation algorithm can be made to allocate the code based on information of neighboring femtocells only. Such limitation of the number of considered femtocells is advantageous since the number of deployed femtocells may include thousands or even millions of femtocells, resulting in a high computational effort. For reducing the number of considered femtocells, the deployment area is divided into a grid of cells. When a new femtocell is deployed within a cell, the algorithm is then run only with the femtocells located within the new femtocell's cell and with the cells surrounding it.

Fig. 2 illustrates this idea with a simplified example. Fig. 2 shows the code allocations for 500 femtocells in a 4 km² area partitioned into a 10 x 10 grid. Here, the cells of the grid form squares. Alternatively, the area may be divided into rectangles or other types of polygons, e.g., equilateral triangles or regular hexagons. In Fig. 2, the dots denote the femtocells and the number next to each femtocell denotes the respective code allocated to the femtocell. When a new femtocell is deployed, the femtocell is placed in the respective cell in the grid. In Fig. 2 it is assumed that the new femtocell is located in cell A (e.g., the new femtocell may be the femtocell having code 7 in cell A). The location information and allocated codes of existing femtocells only in a subset B of the cells are then extracted and input into the algorithm. The subset B of cells only comprises cell A of the new femtocell and the adjacent cells. Please note that the adjacent cells also include the cells which are tangent to the vertices of cell A. The code allocation for the new femtocell is then computed based on its neighbours located in the subset B. With the grid in place, instead of having to consider 500 femtocells, only 45 femtocells are involved. This reduces the computational effort.

The method may be further refined by automatic division of cells in the grid to maintain scalability as will be explained hereinafter:

Typically, the deployment of femtocells results in different densities of femtocells in different areas. Therefore, to ensure the scalability of the code allocation algorithm, the grid size should be location dependent; namely, the grid size for dense femtocell areas (e.g., city centers) should be smaller than for sparse areas (e.g., rural areas or areas with low penetration). This is done by monitoring the number of femtocells located within each cell of the grid. If the number of femtocells within a cell exceeds an upper limit, the cell is split and the femtocells are reallocated into the resulting smaller size cells. The upper limit may be set in dependency on the computational power available to the HUS to run the code allocation algorithm, the more powerful the computer is, the larger the squares can be.

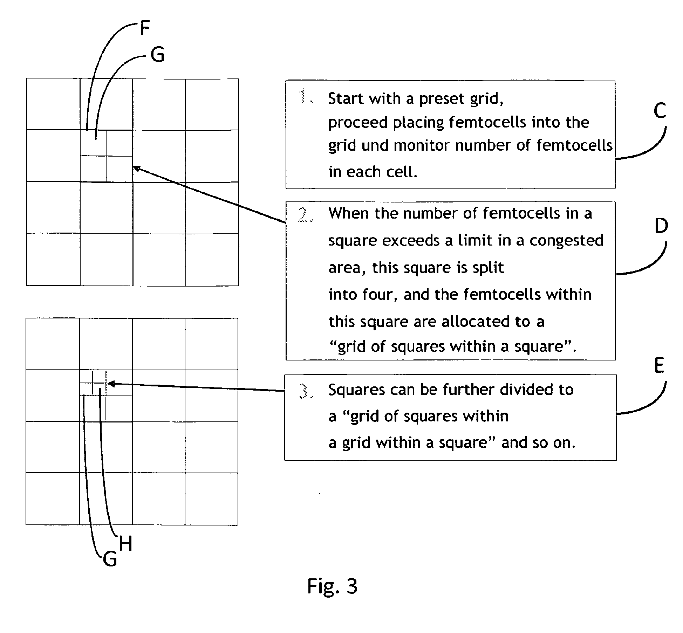

The process of automatic division of cells in the grid is illustrated in Fig. 3 in an exemplary manner:

The process starts with a preset grid of same size cells and femtocells are continuously placed into the grid when deployed. The number of femtocells within each cell is monitored (see comment in box C in Fig. 3).

As indicated in the upper deployment grid in Fig. 3 and in box D of Fig. 3, when the number of femtocells within a cell (here: square F) exceeds a limit, the cell is split into a plurality of smaller size cells (here: square F is split into four smaller size squares G). The femtocells within this square F are allocated to the smaller size squares G forming a (sub)grid within the square F.

As indicated in the lower deployment grid in Fig. 3 and in box D of Fig. 3, if the number of femtocells within one of the smaller size cells G exceeds an upper limit, the respective smaller size cells G can be further divided into a grid of even smaller cells H. If necessary, the process may be iteratively repeated.

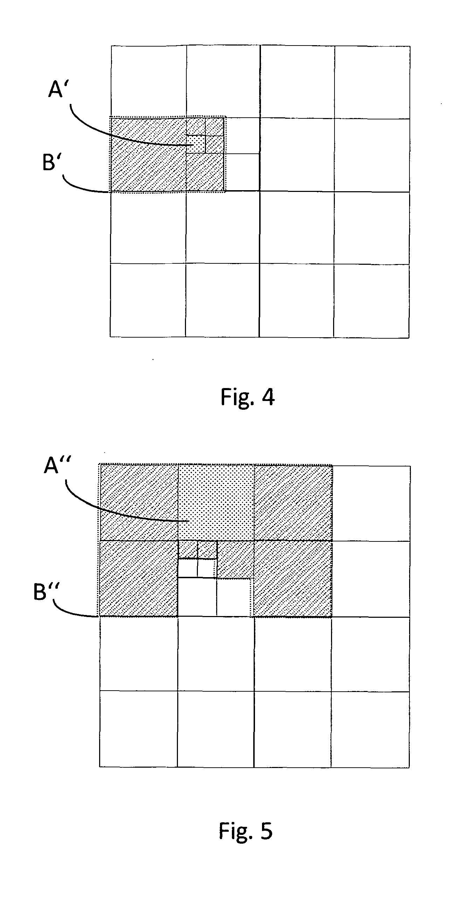

By splitting the cells of the grid, the resulting grid is composed of cells that are not the same size. When allocating the area code to a new femtocell, the same approach of considering only the cell the new femtocell is in, along with all its neighbouring cells is used. This is explained below with reference to two examples of resulting grids in Fig. 4 and 5:

When assuming the resulting grid in Fig. 4 and a new femtocell placed in dotted cell A', only the existing femtocells in the subset B' of cells of the grid - namely the femtocells in dotted cell A' and in the hatched cells adjacent to the dotted cell A' - are considered when allocating the area code to the new femtocell.

Analogously, when assuming the resulting grid in Fig. 5 and a new femtocell placed in dotted cell A", only the existing femtocells in the subset B" of cells of the grid - namely the femtocells in dotted cell A" and in the hatched cells adjacent to dotted cell A" - are considered when allocating the area code to the new femtocell.

Instead of determining the area code to be allocated to a new femtocell by the HUS, the code may be determined locally by the new femtocell if the femtocell has a sniffer capability, i.e., the capability of taking measurements of signals from neighboring femtocells. By analyzing the received signals, the new femtocell gets knowledge about the usage of the area codes of the neighboring femtocells and may determine for each neighboring femtocell the used area code. Further, by analyzing the received signals, e.g., by determining the electrical field strength, the distance to the neighboring second femtocells may be determined. Thus, the sniffer capability can be used to find the area codes used by femtocells within range, and to select an area code that is not used, or an area code that is used furthest away (without being used at a closer femtocell). Nevertheless, the HUS is preferably still in communication with the femtocell for the HUS to determine the location of the femtocell (e.g., by receiving address information as specified by the user) and to communicate to the femtocell the list of area codes to be used in that location.

## Claims

1. A method of automatically allocating an area code to a first femtocell (f₇), a plurality of area codes (C₁-C₄) being allocated to a plurality of second femtocells (f₁-f₆), the method comprising the steps of:
- determining the physical location of the first femtocell (f₇);
- computing distances from the first femtocell (f7) to each of the second femtocells (f1-f6) using location coordinates of the first femtocell and of the second femtocells;
- determining that area code (C₁) of the plurality of area codes (C₁-C₄) which is used furthest away from the first femtocell (f₇) by a second femtocell (C₁), without being used by a closer second femtocell, wherein the step of determining the area code is carried out based on the determined distances; and
- allocating the determined area code (C₁) to the first femtocell (f₇).

2. The method of claim 1, wherein the step of determining the area code is carried out external to the first femtocell at an allocation apparatus for area code allocation of femtocells.

3. The method of claim 2, wherein the step of determining the physical location of the first femtocell comprises the steps of:
- at the allocation apparatus, receiving address information of the first femtocell (f₇); and
- at the allocation apparatus, determining location coordinates based on the address information.

4. The method of claim 1,
wherein the method further comprises the steps of:
- providing a grid of cells, with the grid dividing the area for femtocell deployment; and
- determining that cell (A; A'; A") of the plurality of cells within which the first femtocell (f₇) is located,
and wherein the second femtocells (f₁-f₆) considered in the step of determining the area code are limited to femtocells located within a subset (B; B'; B") of cells of the grid, with the subset (B; B'; B") of cells including the determined cell.

5. The method of claim 4, wherein the subset (B; B'; B") of cells only consists of the determined cell (A; A'; A") and the cells adjacent to the determined cell (A; A'; A").

6. The method of claim 4, wherein the grid size is location dependent.

7. The method of claim 6, wherein the step of providing a grid of cells comprises the steps of:
- providing a grid of cells, with the grid subdividing the area for femtocell deployment;
- monitoring the number of femtocells located within each cell; and
- if the number of femtocells located within a cell (F) exceeds an upper limit, split the respective cell (F) into a plurality of smaller size cells (G).

8. An apparatus for automatically allocating an area code to a first femtocell (f₇), a plurality of area codes (C₁-C₄) being allocated to a plurality of second femtocells (f₁-f₆), the apparatus comprising:
- means for determining the physical location of the first femtocell (f₇);
- means for computing distances from the first femtocell (f7) to each of the second femtocells (f1-f6) using location coordinates of the first femtocell and of the second femtocells;
- means for determining that area code (C₁) of the plurality of area codes (C₁-C₄) which is used furthest away from the first femtocell (f₇) by a second femtocell (f₂), without being used by a closer second femtocell, wherein the means for determining the area code are configured to determine the area code based on the determined distances; and
- means for allocating the determined area code (C₁) to the first femtocell (f₇).

## Patentansprüche

1. Verfahren zur automatischen Vergabe eines Bereichscodes an eine erste Femtozelle (f₇), wobei eine Vielzahl von Bereichscodes (C₁-C₄) an eine Vielzahl von zweiten Femtozellen (f₁-f₆) vergeben wird, wobei das Verfahren folgende Schritte umfasst:
- Ermitteln des physikalischen Standortes der ersten Femtozelle (f₇);
- Berechnen von Abständen von der ersten Femtozelle (f₇) zu jeder der zweiten Femtozellen (f1-f6) unter Verwendung von Standortkoordinaten der ersten Femtozelle und der zweiten Femtozellen;
- Ermitteln jenes Bereichscodes (C₁) von der Vielzahl von Bereichscodes (C₁-C₄), der am weitesten von der ersten Femtozelle (f₇) entfernt durch eine zweite Femtozelle (C₁) verwendet wird, ohne durch eine näherliegende zweite Femtozelle verwendet zu werden, wobei der Schritt des Ermittelns des Bereichscodes basierend auf den ermittelten Abständen ausgeführt wird; und
- Vergeben des ermittelten Bereichscodes (C₁) an die erste Femtozelle (f₇).

2. Verfahren nach Anspruch 1, wobei der Schritt des Ermittelns des Bereichscodes außerhalb der ersten Femtozelle an einer Vergabevorrichtung zur Bereichscodevergabe von Femtozellen ausgeführt wird.

3. Verfahren nach Anspruch 2, wobei der Schritt des Ermittelns des physikalischen Standortes der ersten Femtozelle folgende Schritte umfasst:
- Empfangen von Adressinformationen der ersten Femtozelle (f₇) an der Vergabevorrichtung; und
- Ermitteln von Standortkoordinaten basierend auf den Adressinformationen an der Vergabevorrichtung.

4. Verfahren nach Anspruch 1,
wobei das Verfahren weiterhin folgende Schritte umfasst:
- Bereitstellen eines Zellengitters, wobei das Gitter den Bereich für die Femtozellenverteilung aufteilt; und
- Ermitteln jener Zelle (A; A'; A") von der Vielzahl von Zellen, innerhalb derer die erste Femtozelle (f₇) angeordnet ist,
und wobei die zweiten Femtozellen (f₁-f₆), die im Schritt des Ermittelns des Bereichscodes berücksichtigt sind, auf Femtozellen beschränkt sind, die innerhalb eines Teilsatzes (B; B'; B") von Zellen des Gitters angeordnet sind, wobei der Teilsatz (B; B'; B") von Zellen die ermittelte Zelle umfasst.

5. Verfahren nach Anspruch 4, wobei der Teilsatz (B; B'; B") von Zellen nur aus der ermittelten Zelle (A; A'; A") und den an die ermittelte Zelle (A; A'; A") angrenzenden Zellen besteht.

6. Verfahren nach Anspruch 4, wobei die Gittergröße standortabhängig ist.

7. Verfahren nach Anspruch 6, wobei der Schritt des Bereitstellens eines Zellengitters folgende Schritte umfasst:
- Bereitstellen eines Zellengitters, wobei das Gitter den Bereich für die Femtozellenverteilung unterteilt;
- Überwachen der Anzahl von Femtozellen, die innerhalb jeder Zelle angeordnet sind; und
- wenn die Anzahl von Femtozellen, die innerhalb einer Zelle (F) angeordnet sind, eine Obergrenze übersteigt, das Aufspalten der jeweiligen Zelle (F) in eine Vielzahl von kleineren Zellen (G).

8. Vorrichtung zur automatischen Vergabe eines Bereichscodes an eine erste Femtozelle (f₇), wobei eine Vielzahl von Bereichscodes (C₁-C₄) an eine Vielzahl von zweiten Femtozellen (f₁-f₆) vergeben wird, wobei die Vorrichtung Folgendes umfasst:
- Mittel zum Ermitteln des physikalischen Standortes der ersten Femtozelle (f₇);
- Mittel zum Berechnen von Abständen von der ersten Femtozelle (f₇) zu jeder der zweiten Femtozellen (f1-f6) unter Verwendung von Standortkoordinaten der ersten Femtozelle und der zweiten Femtozellen;
- Mittel zum Ermitteln jenes Bereichscodes (C₁) von der Vielzahl von Bereichscodes (C₁-C₄), der am weitesten von der ersten Femtozelle (f₇) entfernt durch eine zweite Femtozelle (f₂) verwendet wird, ohne durch eine näherliegende zweite Femtozelle verwendet zu werden, wobei die Mittel zum Ermitteln des Bereichscodes dafür ausgelegt sind, um den Bereichscode basierend auf den ermittelten Abständen zu ermitteln; und
- Mittel zum Vergeben des ermittelten Bereichscodes (C₁) an die erste Femtozelle (f₇).

## Revendications

1. Procédé d'attribution automatique d'un code de zone à une première femtocellule (f₇), une pluralité de codes de zone (C₁ à C₄) étant attribués à une pluralité de deuxièmes femtocellules (f₁ à f₆), le procédé comprenant les étapes suivantes
- déterminer l'emplacement physique de la première femtocellule (f₇) ;
- calculer des distances entre la première femtocellule (f7) et chacune des deuxièmes femtocellules (f1 à f6) en utilisant des coordonnées d'emplacement de la première femtocellule et des deuxièmes femtocellules ;
- déterminer qu'un code de zone (C₁) parmi la pluralité de codes de zone (C₁ à C₄) qui est utilisé le plus loin de la première femtocellule (f₇) par une deuxième femtocellule (C₁), sans être utilisé par une deuxième femtocellule plus proche, dans lequel l'étape de détermination du code de zone est exécutée sur la base des distances déterminées ; et
- attribuer le code de zone (C₁) déterminé à la première femtocellule (f₇).

2. Procédé selon la revendication 1, dans lequel l'étape de détermination du code de zone est exécutée à l'extérieur de la première femtocellule au niveau d'un appareil d'attribution pour une attribution de code de zone de femtocellules.

3. Procédé selon la revendication 2, dans lequel l'étape de détermination de l'emplacement physique de la première femtocellule comprend les étapes suivantes :
- au niveau de l'appareil d'attribution, recevoir des informations d'adresse de la première femtocellule (f₇) ; et
- au niveau de l'appareil d'attribution, déterminer des coordonnées d'emplacement sur la base des informations d'adresse.

4. Procédé selon la revendication 1,
dans lequel le procédé comprend en outre les étapes suivantes :
- fournir une grille de cellules, la grille divisant la zone pour le déploiement de femtocellules ; et
- déterminer la cellule (A ; A' ; A") parmi la pluralité de cellules dans laquelle la première femtocellule (f₇) est située,
et dans lequel les deuxièmes femtocellules (f₁ à f₆) considérées à l'étape de détermination du code de zone sont limitées aux femtocellules situées dans un sous-ensemble (B ; B' ; B") de cellules de la grille, le sous-ensemble (B ; B' ; B") de cellules comprenant la cellule déterminée.

5. Procédé selon la revendication 4, dans lequel le sous-ensemble (B ; B' ; B") de cellules n'est constitué que de la cellule déterminée (A ; A' ; A") et des cellules adjacentes à la cellule déterminée (A ; A' ; A").

6. Procédé selon 4, dans lequel la taille de grille dépend de l'emplacement.

7. Procédé selon la revendication 6, dans lequel l'étape de fourniture d'une grille de cellules comprend les étapes suivantes :
- fournir une grille de cellules, la grille subdivisant la zone pour le déploiement de femtocellules ;
- surveiller le nombre de femtocellules situées dans chaque cellule ; et
- si le nombre de femtocellules situées à l'intérieur d'une cellule (F) dépasse une limite supérieure, diviser la cellule respective (F) en une pluralité de cellules de plus petite taille (G).

8. Appareil d'attribution automatique d'un code de zone à une première femtocellule (f₇), une pluralité de codes de zone (C₁ à C₄) étant attribués à une pluralité de deuxièmes femtocellules (f₁ à f₆), l'appareil comprenant :
- des moyens pour déterminer l'emplacement physique de la première femtocellule (f₇) ;
- des moyens pour calculer des distances entre la première femtocellule (f₇) et chacune des deuxièmes femtocellules (f₁ à f₆) en utilisant des coordonnées d'emplacement de la première femtocellule et des deuxièmes femtocellules ;
- des moyens pour déterminer qu'un code de zone (C₁) parmi la pluralité de codes de zone (C₁ à C₄) qui est utilisé le plus loin de la première femtocellule (f₇) par une deuxième femtocellule (f₂), sans être utilisé par une deuxième femtocellule plus proche, dans lequel les moyens pour déterminer le code de zone sont configurés pour déterminer le code de zone sur la base des distances déterminées ; et
- des moyens pour attribuer le code de zone (C₁) déterminé à la première femtocellule (f₇).
